# EUROPEAN PATENT SPECIFICATION

(11) **EP 3 268 802 B1**
(45) Date of publication and mention of the grant of the patent: **08.05.2019**
(21) Application number: 16715890.6
(22) Date of filing: 07.03.2016
(51) Int. Cl.: G02C 5/12

(54) **GLASSES WITH DEVICE FOR SUPPORTING THE FRAME ON THE NOSE**
BRILLE MIT VORRICHTUNG ZUM ABSTÜTZEN DES RAHMENS AUF DER NASE
LUNETTES DOTÉES DE DISPOSITIF POUR SOUTENIR LA MONTURE SUR LE NEZ

(30) Priority: 09.03.2015 IT BS20150036
(43) Date of publication of application: 17.01.2018
(73) Proprietor: Univet S.r.l., 24121 Bergamo (IT)
(72) Inventor: BORSANI, Fabio, 25086 Rezzato-BRESCIA (IT)
(74) Representative: Tana, Maria Gabriella
(86) International application number: PCT/IB2016/051280
(87) International publication number: WO 2016/142840

(56) References cited:
- WO-A1-2007/148352
- WO-A1-2009/118009
- DE-U1- 20 314 346
- DE-U1-202011 105 922
- US-A- 2 881 661
- US-A- 4 190 334
- US-A- 5 369 451

## Description

This invention relates to glasses provided with a device for supporting the frame on the nose, as well as said support device and its components.

In particular, this invention relates to glasses for medical use, for example used by surgeons in the operating room, or for work, typically used for safety reasons.

As is known, glasses are generally constituted by a frame that supports the lenses, resting on the nose, generally at eye level, by means of a support, generally constituted by a pair of nose pads.

Since this is the only point of support, the comfort and functionality of the glasses generally depends precisely on the support. In fact, this can be annoying, for example in the case in which they are made from hard materials that chap, redden, or mark the skin, or the maintenance of the frame in the correct position desired for the work is not ensured. The following documents disclose prior art nose supports comprising hollow nose pads: DE 20314346 U1, US 4 190 334, DE 20211105922 U1, US 5 369 451.

The purpose of this invention is to provide glasses with a frame support device that overcome the drawbacks of the prior art and meet the above-mentioned needs.

This purpose is achieved by glasses realised according to claim 1. The dependent claims describe embodiment variants.

The characteristics and advantages of the glasses according to this invention will be apparent from the following description, given by way of non-limiting example, in accordance with the accompanying figures, in which:

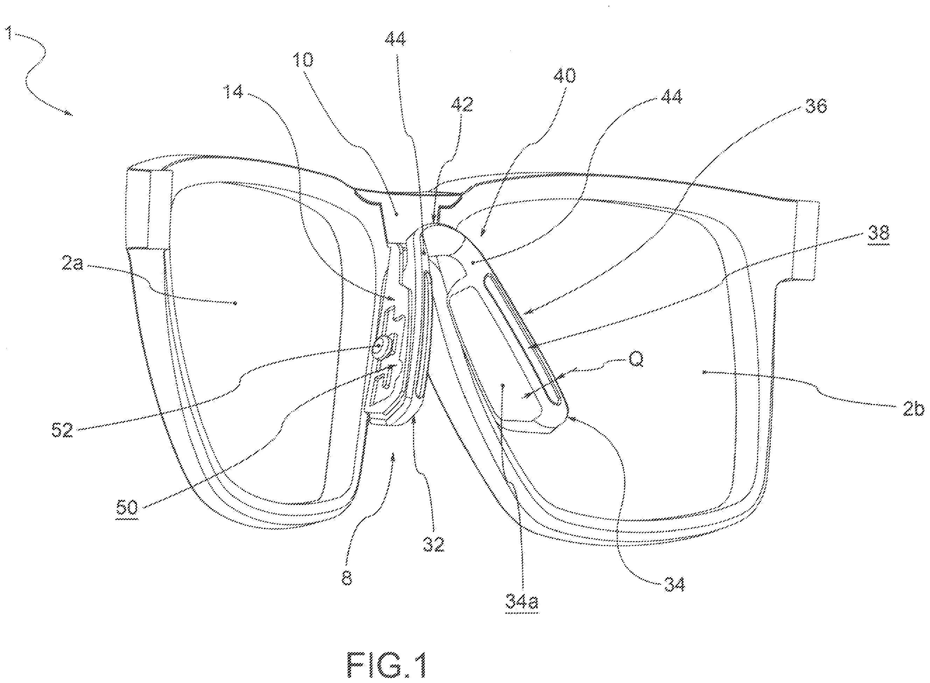

- Figure 1 shows a frame provided with support device according to an embodiment of this invention;

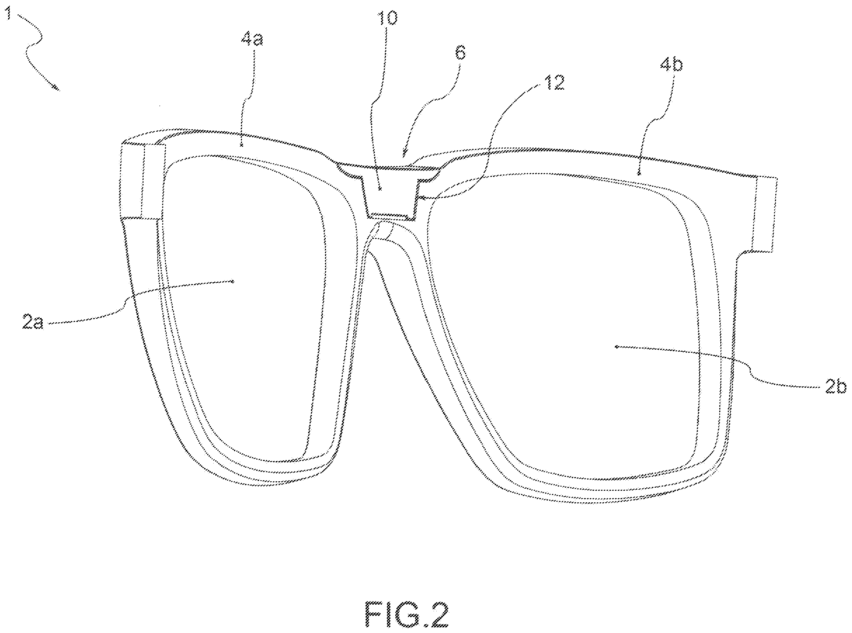

- Figure 2 shows the frame without the support device;

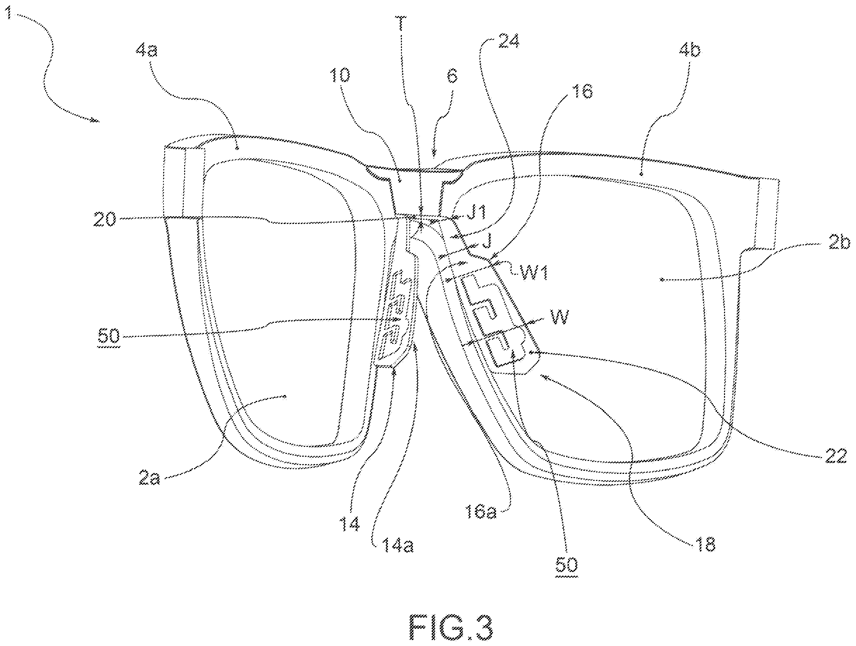

- Figure 3 shows the frame provided with tabs of the support device according to this invention;
- Figures 4, 5 and 6 show adjustment configurations of the support device according to this invention;
- Figure 4a shows a section of a support device according to an embodiment of this invention;

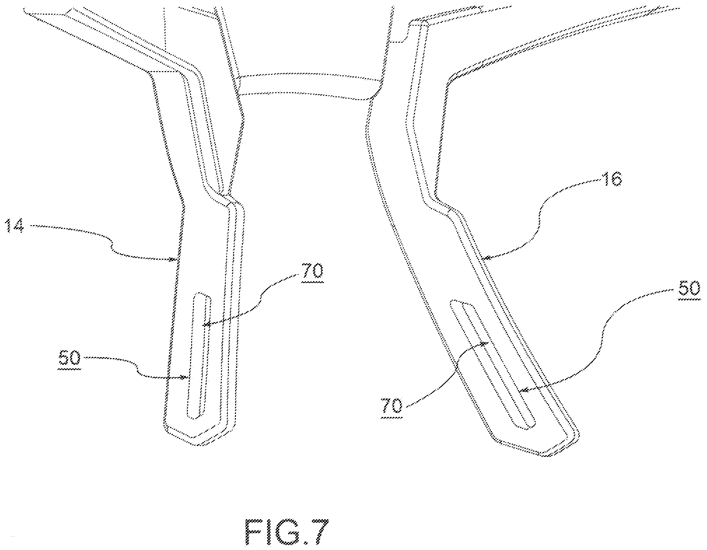

- Figure 7 shows tabs of the support device according to a further embodiment of this invention;
- Figure 8 shows the support device according to a further embodiment of this invention, in a first adjustment configuration;
- Figure 9 shows the support device of Figure 8, in a further adjustment configuration.

With reference to the accompanying figures, 1 generally indicates a glasses frame, for example for medical or safety use.

The frame 1 is suitable to support at least one lens in front of the user's eyes; for example, the frame 1 comprises a semi-frame 2a and a semi-frame 2b, each suitable to support a respective lens 4a, 4b of the glasses, or, in an embodiment variant, a single common lens for the two eyes.

The frame 1 also comprises a bridge region 6, intended to pass over the nose, which connects the semi-frame 2a and the semi-frame 2b.

The glasses also comprise a support device 8 arranged in correspondence of the bridge region 6 for the support of the frame 1 on the user's nose.

According to an embodiment, the support device 8 is removable from the frame.

For example, according to this embodiment, the support device 8 comprises a connection element 10 coupleable to the frame 1, for example, arranged in the bridge region 6.

For example, the connection element 10 is fixable to the frame 1, and in particular the bridge region 6, by means of a screw. For example, a connection seat 12 is provided in the bridge region 6.

When the screw is removed and the connection element 10 is separated from the frame 1, it is possible to apply the support device 8 to the frame 1, for example in the connection seat 12 left free by the connection element 10. When the connection element 10 is again positioned in the seat 12 and the screw is re-tightened, the support device 8 remains applied to the frame.

The support device 8 comprises a pair of support tabs 14, 16 made for example of metallic material, preferably provided with particular "memory effects", for example stainless steel, titanium, beta titanium or their alloys.

Preferably, each tab 14, 16 is constituted by a thin plate and has a main surface 14a, 16a facing the main surface 16a, 14a of the other tab 16, 14.

When the device 8 is applied to the frame 1, the tabs 14, 16 protrude from the bridge region 6, so as to be arranged alongside the user's nasal walls, with their main surfaces 14a, 16a facing each other.

Preferably, the tabs 14, 16 are divergent, moving away from the bridge region 6, to better follow the typical shape of the nose.

Preferably, a tab body 18 is made in a single piece and comprises both tabs 14, 16, joined together by a joining element 20, typically in the form of a thin plate.

Said joining element 20 is suitable to be inserted in the connection seat 12 to be locked by the connection element 10.

Preferably, the joining element 20, in the form of a thin plate, has a thickness T and lies on an imaginary plane from which protrude the two tabs 14, 16.

Each tab 14, 16 has an application area 22 on which is formed a through opening 50 (which will be described below), and a connection area 24 that connects the application area 22 to the joining element 20.

Preferably, the application area 22 has a width W increasing as it moves away from the joining element 20, starting from a minimum width W1.

Similarly, the connection area 24 has a width J increasing as it moves away from the joining element 20, starting from a minimum width J1 in correspondence of the joining element 20.

The minimum width W1 of the application area 22 is smaller than the minimum width J1 of the connection area 24 and said minimum width J1 is smaller than a thickness T of the joining element 20.

The tab body 18 is particularly suitable to adapt to the width of the nose in the support area, despite the rigidity of the material, thanks to its structural flexibility and, in particular, by virtue of structural and dimensional characteristics of the connection of the tabs 14, 16 of the joining element 20.

The support device 8 also comprises a pair of support elements 32, 34 suitable to be applied to the respective tabs 14, 32, for example through the through opening 50 of the application area 22 by being interposed between these and the surface of the nose, with which the said support elements go in contact in correspondence of a contact surface 32a, 34a.

Said contact surface 32a, 34a is more or less extensive, according to the possible adjustment of the support device 8 (which will be discussed below).

Preferably, the support element 32, 34 comprises a support portion 36 supporting the contact surface 32a,34a, made of a soft material (stiffness much less than the stiffness of the tabs), for example, made of thermoplastic rubber, and a coupling portion 35, for example applied to the rear of the support portion 36, suitable for coupling the supporting portion 36 to the tab, made of a stiffer material, for example nylon, in any case able to ensure a soft adjustment.

The support element 32, 34 is preferably made by co-moulding of the support portion 36 with the coupling portion 35.

In addition, the support portion 36 is made of a non-slip material, on which, at least in correspondence of the contact surface 32a, 34a, a textured finish is made to increase the level of adhesion with the surface of the nose.

In particular, the support portion 36 of the support element 32, 34 is compressible, in a differential manner according to the contact areas, under the action of the weight of the frame and of any additional components applied to it.

In this way, when the glasses are resting on the nose in the desired position, the support device 8 ensures a high comfort since tab body 18 is deformed, i.e., the tabs 14, 16 move mutually away according to the load conditions, but retain their shape, since structurally stiff, while the support portions 36 of the support elements 32, 34 are compressed and deformed, in a differential manner according to the contact areas, adapting to the shape, even irregular, the surface of the nose.

Preferably, the support elements 32, 34 have an overall elongated shape and the support portion 36, after applying the support elements 32, 34 to the tabs 14, 16, covers, at least partially, the application area 22 of said tabs.

Preferably, the support portion 36 has a thickness Q, in correspondence of which is formed an empty inner compartment 38, preferably passing through the entire width of the support portion 36.

Advantageously, the inner compartment 38 allows further increasing the capacity of deformation and adaptation of the support portion 36.

A support body 40, made in a single piece, comprises the two support elements 32, 42 and a joining portion 34 which joins them and which, when the glasses are worn, is positioned astride the nose, preferably in such a way as to touch them in the upper part, so as to better distribute the weight of the frame.

Each support element 32, 34 also comprises a connection portion 44 that connects the respective support element 32, 34 to the joining portion 42.

The support device 8 also comprises adjustment means suitable for positioning and fixing the support elements 32, 34 to the respective tabs 14, 16 in an adjustable manner.

Said adjustment means comprise at least one guide element 52 of the support element 32, 34, protruding from the support portion 36, for example protruding from the rear coupling portion 35, on the side opposite to the contact surface 34a, 36a with the nose.

As mentioned, the tab 14, 16 has a through opening 50. The guide element 52 is suitable to slide inside the through opening 50, thus guiding the support element 32, 34 in different positions with respect to the tab 14, 16 and, in particular, with respect to the support portion 36 of this.

In an embodiment, the through opening 50 comprises a plurality of discrete stop stations 54, 56, 58, in which the guide element 52 remains constrained to maintain the position. Said stop stations are preferably arranged in succession along the length of the tab.

For example, the through opening 50 comprises three stop stations 54, 56, 58.

For example, said stop stations 54, 56, 58 are suitable to engage by interference the guide element 52, holding it in the respective position; for example, said interference is realised by suitably dimensioning the width of said stop stations, predefined so as to be slightly smaller than the corresponding dimension of the guide element.

According to a further embodiment, the stop stations are suitable to realise a snap engagement with the guide element 52; for example, said snap engagement is achieved by providing a projection in an area of access to the stop station, with which the guide element 52, pushed to enter the stop station, goes first in interference and then overcomes it, clicking into the stop station.

Preferably, said guide element 52 is a peg provided with a shank 60, projecting from the support portion 36, for example projecting from coupling portion 35, and, preferably, of a head 62, having a larger section than the section of the shank 60.

The shank 60 is suitable to slide in the through opening 50 and, for example, according to the aforesaid embodiments, to come into interference with the stop stations 54, 56, 58 or to snap-engage with these, while the head 62 prevents the separation of the support element 32, 34 from the respective tab 14, 16.

In other words, the support element 32, 34 and the respective tab 14, 16 are suitable to mutually slide on the main surface 14a, 16a of the tab 14, 16, while they are constrained so as to prevent separation.

To allow the separation of the support element 32, 34 from the respective tab 14, 16, the through opening 50 provides for a separating station 64, through which the guide element 52 can pass.

For example, said separating station 64 is a circumscribed area of the through opening 50 having a characteristic dimension, for example the diameter, which allows the passage of the head 62 of the peg 52.

According to an embodiment, the through opening 50 comprises a main channel 70 which extends in the longitudinal direction along a main direction K, preferably a plurality of secondary channels 72, 74, 76, which extend along directions L1, L2, L3 in the direction of the width of the tab 14, 16 incident to the main direction K, and said stop stations 54, 56, 58.

The stop stations 54, 56, 58 are accessible from the main channel 70 through said secondary channels 72, 74, 76.

Preferably, between the secondary channels 72, 74, 76 and the respective stop stations 54, 56, 58, there is also an elbow tube that allows access to the latter.

Preferably, moreover, the separating station 64 is arranged along the main channel 70.

According to a further embodiment, the tabs 14, 16 of the support device 8 are made in one piece with the frame.

Preferably, moreover, the tabs 14, 16 are made of plastic material, for example polyamide (nylon), polycarbonate or polypropylene.

In a further embodiment, said adjustment means are suitable to achieve a continuous adjustment of the position of the support element 32, 34 along the through opening 50.

For example, in said embodiment, the guide element 52 permanently engages the through opening 50 by interference, so as to be positioned at any position along said through opening 50, for example along the main channel 70 of this.

According to a still further embodiment, the support elements 32, 34 are not separable from the respective tabs 14, 16 (if not by tampering or breakage).

Furthermore, according to an embodiment, the glasses according to this invention comprise a pair of temples, connected to the frame 1, for engagement with the ears; according to a further embodiment variant, the glasses comprise an elastic band connected at its ends with the frame, intended to be positioned in correspondence behind the neck.

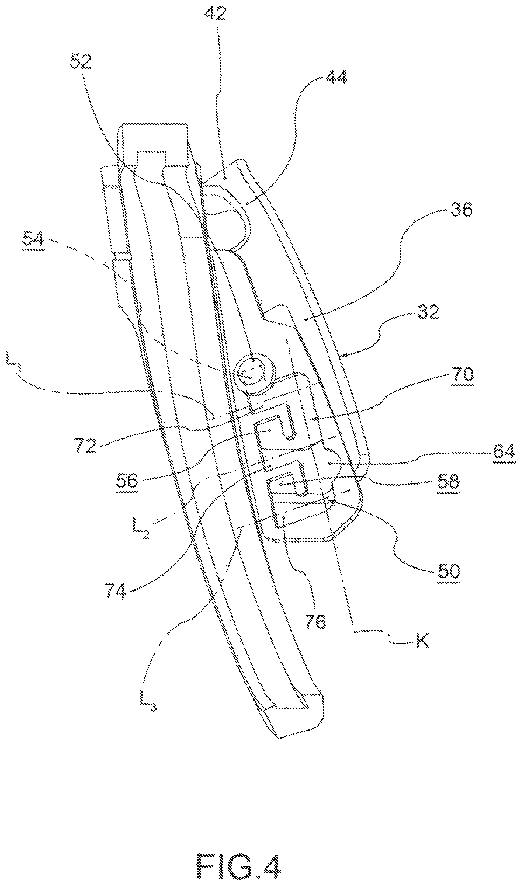

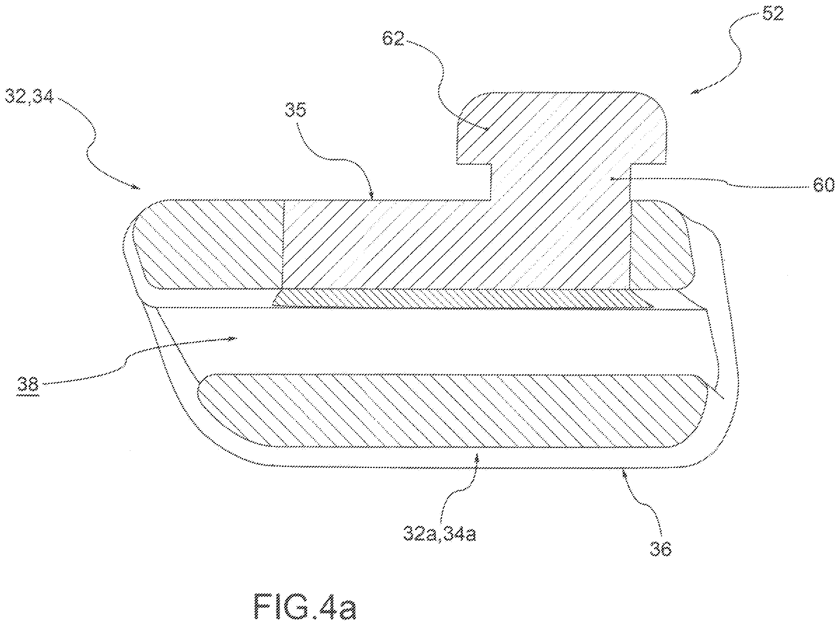

In the normal use of the glasses according to this invention, the user, after possibly applying the support device 8 to the frame 1, can adjust the position of the support elements 32, 34, for example, starting to position them in the highest position with respect to the frame (Figure 4).

After positioning the glasses on the nose, using the temples or the elastic band, the tabs 14, 16, by virtue of the structural deformability of the tab body 18, will tend to move away from each other, according to the width of the nose and the load, adapting to these, while remaining of undeformed itself.

At the same time, the support portions 36 of the support elements 32, 34 will tend to compress and deform in a differential manner according to the areas, realising a contact surface 34a, 36a with the nose that follows the shape, even irregular, of the surface of the nose.

In this way, an excellent level of comfort of the glasses is achieved.

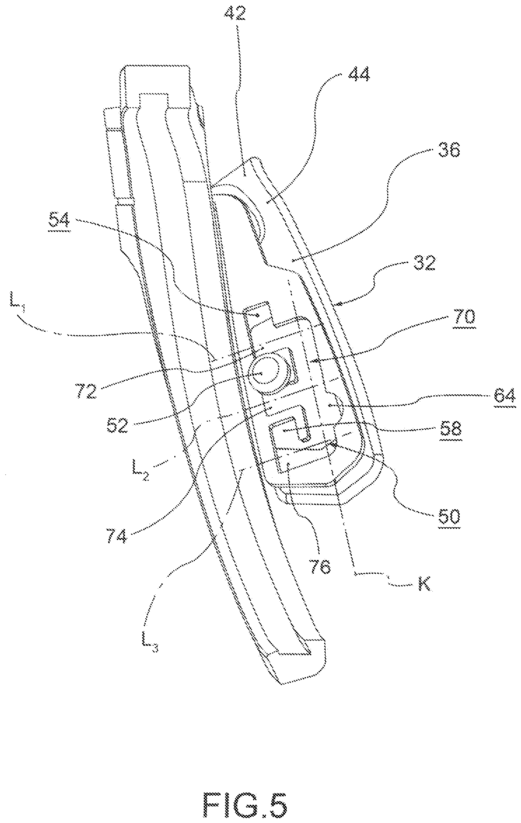

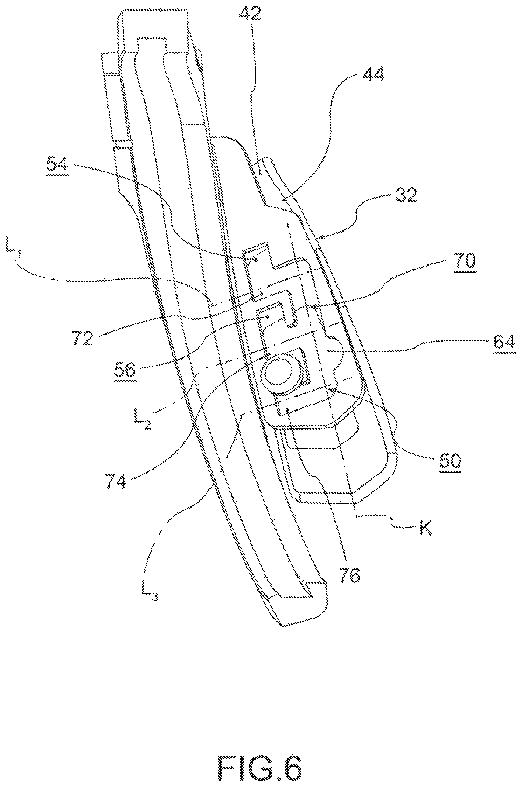

If the user verifies that the highest position is not suitable to his needs, he can remove the glasses, arrange the support elements 32, 34 in the second position (Figure 5) and put them back on, and so on, also for the third (Figure 6) or subsequent position.

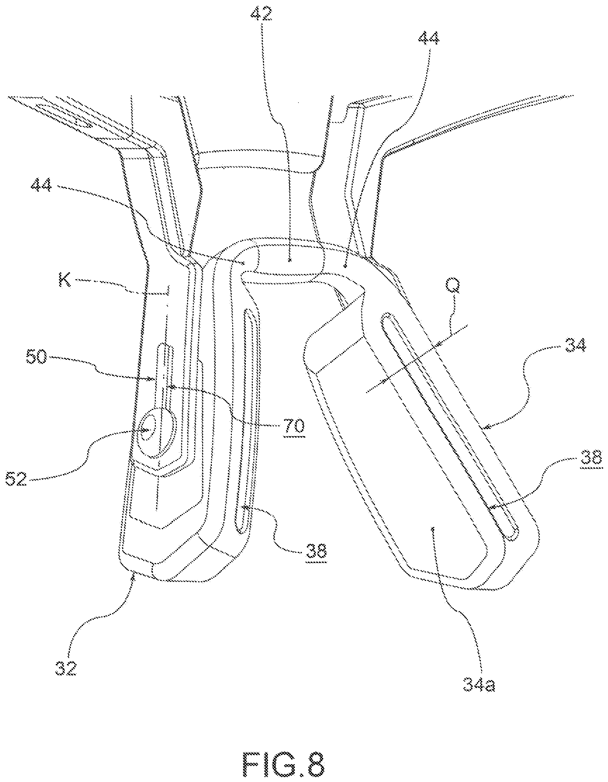

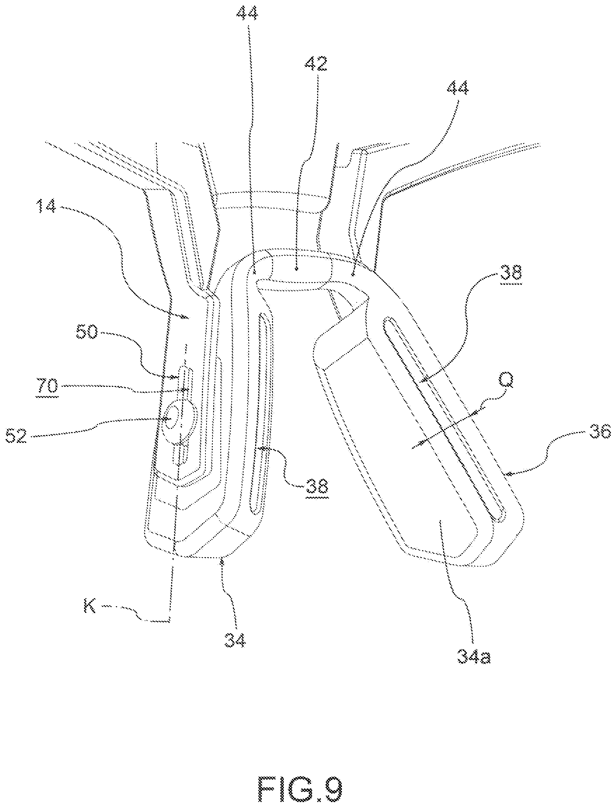

Similarly, the glasses according to this invention are adjustable, providing a continuous adjustment of the position of the support elements 32, 34 (Figures 8 and 9).

Innovatively, the glasses according to this invention overcome the drawbacks of the prior art and meet the needs of the sector.

In fact, especially in the sector of glasses for medical use or in the sector of work glasses, the overall weight on the nose can be significant due to the application on the frame of a plurality of accessories, such binoculars, lamps, cameras, etc.

For the glasses have a high comfort, it is necessary that they be optimally adapted to the surface of the nose, in all conditions of weight and positioning.

The glasses according to this invention meet this need, in that, both when the weight is high that when the weight is reduced, part of the adaptation is performed by the tabs and part by the support elements, which deform adapting to the shape of the nose.

Moreover, advantageously, the glasses according to this invention allow to arranging the lenses and any accessories applied to the frame in the position desired by the user, thanks to the adjustment means.

According to a further advantageous aspect, the support elements can be washed or replaced, as, in an embodiment, they are separable from the tabs.

According to a still further advantageous aspect, the frame can also be used in the conventional manner, since the support device, in an embodiment, is separable from the frame.

It is clear that a one skilled in the art may make modifications to the glasses described above, in order to meet contingent needs as far as these modifications are contained within the scope of protection, as defined by the following claims.

## Claims

1. Support device (8) for the support of a glasses frame (1) on the nose, comprising
- a pair of support tabs (14, 16) made of a first material, each having a respective main surface (14a, 16a) facing the main surface (16a, 14a) of the other tab (16, 14);
- a pair of support elements (32, 34), each applied to the respective tab (14, 16) on the side of the main surface (14a, 16a), each comprising a support portion (36) provided with a contact surface (32a, 34) with the nose and made of a second material, such as an elastomer material, with reduced stiffness compared to the first material,
wherein the main surfaces (14a, 16a) each have an application area (22) on which a through opening (50) is made for the application of the respective support elements (32, 34) and said support portions (36) of the support elements (32, 34) cover at least partially said application area (22),
and wherein the device comprises a tab body (18) made in one piece comprising said tabs (14, 16) and a joining element (20) to which said tabs are joined by a connection area (24) and which defines an imaginary plane from which said tabs protrude,
wherein the application area (22) has a width (W) increasing as it moves away from the joining element (20), starting from a minimum width (W1),
wherein the connection area (24) has a width (J) increasing as it moves away from the joining element (20), starting from a minimum width (J1) at the junction with the joining element (20),
and wherein the support portion (36) has a thickness (Q) at which an empty inner compartment (38) is made and wherein the inner compartment (38) passes through the width of the support portion (36).

2. Device according to claim 1, wherein the minimum width (W1) of the application area (22) is less than the minimum width (J1) of the connection area (24).

3. Device according to claim 2, wherein said minimum width (J1) is less than a thickness (T) of the joining element (20).

4. Device according to any of the preceding claims, in which a support body (40), made in a single piece, comprises the two support elements (32, 34) and a joining portion (42) which joins them and which, when the glasses are worn, is positioned astride the nose.

5. Device according to any of the preceding claims, wherein each tab (14, 16) has a through opening (50) for the application of the respective support element (32,34).

6. Device according to any of the preceding claims, further comprising adjustment means suitable for positioning the support elements (32, 34) to the respective tabs (14, 16) in an adjustable manner.

7. Device according to claim 6, wherein said adjustment means comprise at least one guide element (52) for each support element (32, 34), projecting from the opposite side to the respective contact surface (34a, 36a) slidingly engaged with the respective tab (14, 16).

8. Device according to claim 7, wherein each tab (14, 16) has a through opening (50) for the application of the respective support element (32, 34).

9. Device according to claim 8, wherein said guide element (52) is positionable with interference along the through opening (50).

10. Device according to claim 8, wherein the through opening (50) comprises a plurality of discrete stop stations (54, 56, 58), in which the guide element (52) remains constrained to maintain the position, for example by interference or snap-fitting.

11. Device according to claim 10, wherein the through opening (50) comprises a main channel (70) which extends in the longitudinal direction along a main direction (K), a plurality of secondary channels (72, 74, 76), which extend along directions (L1, L2, L3) in the direction of the width of the tab (14, 16), incident to the main direction (K), and said stop stations (54, 56, 58) are accessible from the main channel (70) through said secondary channels (72, 74, 76).

12. Device according to any of the previous claims, wherein the support elements (32, 34) are permanently engaged with the tabs.

13. Device according to any of the claims from 1 to 11, wherein the support elements (32, 34) are detachable from the tabs.

14. Device according to claim 13 and 8, wherein the through opening (50) comprises a separating station (64) having a characteristic size such as to be crossed by the guide element (52) to detach the support element (32, 34) from the respective tab (14, 16).

15. Glasses comprising a frame (1) and a support device (8) for the nose according to any of the preceding claims.

## Patentansprüche

1. Stützvorrichtung (8) zum Stützen eines Brillengestells (1) auf der Nase, umfassend
- ein Paar Stützaufhänger (14,16) aus einem ersten Material, von denen jeder eine diesbezügliche Hauptfläche (14a, 16a) aufweist, die der Hauptfläche (16a, 14a) des anderen Aufhängers (16,14) gegenüberliegt;
- ein Paar Stützelemente (32, 34), von denen jedes an dem diesbezüglichen Aufhänger (14, 16) auf der Seite der Hauptfläche (14a, 16a) eingesetzt wird, und jedes einen Stützteil (36) umfasst, versehen mit einer Kontaktfläche (32a, 34) mit der Nase und hergestellt aus einem zweiten Material, etwa einem Elastomer-Material, mit reduzierter Steifheit, verglichen mit dem ersten Material,
wobei jede der Hauptflächen (14a, 16a) einen Einsatzbereich (22) aufweist, auf dem eine Durchgangsöffnung (50) zum Einsetzen der diesbezüglichen Stützelemente (32, 34) gemacht wird, und besagte Stützteile (36) der Stützelemente (32, 34) bedecken mindestens teilweise besagten Einsatzbereich (22),
und wobei die Vorrichtung einen Aufhängerkörper (18) umfasst, in einem Stück gefertigt, umfassend besagte Aufhänger (14, 16) und ein Verbindungselement (20), mit dem besagte Aufhänger durch einen Verbindungsbereich (24) verbunden werden, und das eine imaginäre Ebene definiert, aus der besagte Aufhänger herausragen,
wobei der Einsatzbereich (22) eine Breite (W) aufweist, die sich vergrößert, wenn er sich von dem Verbindungselement (20) entfernt, beginnend von einer Mindestbreite (W1),
bei der der Verbindungsbereich (24) eine Breite (J) aufweist, die sich vergrößert, wenn er sich vom Verbindungselement (20) entfernt, beginnend von einer Mindestbreite (J1) bei der Schnittstelle mit dem Verbindungselement (20),
und wobei das Stützteil (36) eine Dicke (Q) aufweist, bei der ein leeres Innenfach (38) gemacht wird und wobei das Innenfach (38) durch die Breite des Stützteils (36) durchpasst.

2. Vorrichtung gemäß Anspruch 1, wobei die Mindestbreite (W1) des Einsatzbereiches (22) kleiner ist als die Mindestbreite (J1) des Verbindungsbereiches (24).

3. Vorrichtung gemäß Anspruch 2, wobei besagte Mindestbreite (J1) kleiner ist als die Dicke (T) des Verbindungselementes (20) .

4. Vorrichtung gemäß einem der vorhergehenden Ansprüche, bei der ein Stützkörper (40), in einem Stück gefertigt, die beiden Stützelemente (32, 34) und einen Verbindungsteil (42) umfasst, der sie miteinander verbindet und der, wenn die Brille getragen wird, rittlings auf der Nase positioniert ist.

5. Vorrichtung gemäß einem der vorhergehenden Ansprüche, wobei jeder Aufhänger (14, 16) eine Durchgangsöffnung (50) für das Einsetzen des diesbezüglichen Stützelementes (32, 34) aufweist.

6. Vorrichtung gemäß einem der vorhergehenden Ansprüche, die ferner Einstellmittel umfasst, geeignet, um die Stützelemente (32,34) an die diesbezüglichen Aufhänger (14, 16) auf regulierbare Weise zu positionieren.

7. Vorrichtung gemäß Anspruch 6, wobei besagte Einstellmittel mindestens ein Führungselement (52) für jedes Stützelement (32, 34) umfassen, das von der entgegengesetzten Seite zur diesbezüglichen Kontaktfläche (34a, 36a) hin herausragt, und gleitend den diesbezüglichen Aufhänger (14, 16) in Anspruch nimmt.

8. Vorrichtung gemäß Anspruch 7, wobei jeder Aufhänger (14, 16) eine Durchgangsöffnung (50) für das Einsetzen des diesbezüglichen Stützelementes (32, 34) aufweist.

9. Vorrichtung gemäß Anspruch 8, wobei besagtes Führungselement (52) mit Interferenz längs der Durchgangsöffnung (50) positionierbar ist.

10. Vorrichtung gemäß Anspruch 8, wobei die Durchgangsöffnung (50) eine Vielzahl von einzelnen Stoppstationen (54, 56, 58) umfasst, bei denen das Führungselement (52) eingeschränkt wird, um die Position beizubehalten, zum Beispiel durch Interferenz oder Einschnappen.

11. Vorrichtung gemäß Anspruch 10, wobei die Durchgangsöffnung (50) einen Hauptkanal (70), der sich in Längsrichtung längs einer Hauptrichtung (K) erstreckt, und eine Vielzahl von Sekundärkanälen (72, 74, 76) umfasst, die sich längs Richtungen (L1, L2, L3) in Richtung der Breite der Aufhänger (14, 16) erstrecken, verbunden mit der Hauptrichtung (K), und besagte Stoppstationen (54, 56, 58) sind vom Hauptkanal (70) aus durch die besagten fünf Sekundärkanäle (72, 74, 76) erreichbar.

12. Vorrichtung gemäß einem der vorhergehenden Ansprüche, wobei die Stützelemente (32, 34) permanent mit den Aufhängern in Kontakt sind.

13. Vorrichtung gemäß einem der vorhergehenden Ansprüche von 1 bis 11, wobei die Stützelemente (32, 34) von den Aufhängern getrennt werden können.

14. Vorrichtung gemäß Anspruch 13 und 8, wobei die Durchgangsöffnung (50) eine Trennstation (64) mit einer charakteristischen Größe umfasst, so dass sie vom Führungselement (52) durchquert werden kann, um das Stützelement (32, 34) von dem diesbezüglichen Aufhänger (14, 16) zu trennen.

15. Eine Brille, umfassend ein Gestell (1) und eine Stützvorrichtung (8) für die Nase gemäß einem der vorherigen Ansprüche.

## Revendications

1. Dispositif de soutien (8) pour le soutien d'une monture de lunettes (1) sur le nez, comprenant
- une paire de pattes de support (14, 16) constituées d'un premier matériau, ayant chacune une surface principale respective (14a, 16a) faisant face à la surface principale (16a, 14a) de l'autre patte (16, 14) ;
- une paire d'éléments de soutien (32, 34), appliqués chacun sur la patte respective (14, 16) du côté de la surface principale (14a, 16a), comprenant chacun une portion de soutien (36) munie d'une surface de contact (32a, 34) avec le nez et constituée d'un second matériau, tel qu'un matériau élastomère, avec une rigidité réduite par rapport au premier matériau,
où les surfaces principales (14a, 16a) ont chacune une zone d'application (22) sur laquelle est réalisée une ouverture traversante (50) pour l'application des éléments de soutien respectifs (32, 34) et lesdites parties de soutien (36) des éléments de soutien (32, 34) recouvrent au moins partiellement ladite zone d'application (22),
et où le dispositif comprend un corps de patte (18) fabriqué d'une seule pièce, comprenant lesdites pattes (14, 16) et un élément de jonction (20) auquel lesdites pattes sont reliées par une zone de connexion (24) et qui définit un plan imaginaire à partir duquel lesdites pattes dépassent,
où la zone d'application (22) possède une largeur (W) qui augmente au fur et à mesure qu'elle s'éloigne de l'élément de jonction (20), à partir d'une largeur minimale (W1),
où la zone de connexion (24) possède une largeur (J) qui augmente au fur et à mesure qu'elle s'éloigne de l'élément de jonction (20), à partir d'une largeur minimale (J1) à la jonction avec l'élément de jonction (20),
et où la portion de soutien (36) possède une épaisseur (Q) à laquelle est formé un compartiment interne vide (38) et où le compartiment interne (38) traverse la largeur de la partie de soutien (36).

2. Dispositif selon la revendication 1, où la largeur minimum (W1) de la zone d'application (22) est inférieure à la largeur minimum (J1) de la zone de connexion (24).

3. Dispositif selon la revendication 2, où ladite largeur minimum (J1) est inférieure à une épaisseur (T) de l'élément de jonction (20) .

4. Dispositif selon l'une des revendications précédentes, dans lequel un corps de soutien (40), fabriqué d'une seule pièce, comprend les deux éléments de soutien (32, 34) et une portion de jonction (42) qui les relie et qui, lorsque les lunettes sont portées, est positionnée à cheval sur le nez.

5. Dispositif selon l'une des revendications précédentes, où chaque patte (14, 16) possède une ouverture traversante (50) pour l'application de l'élément de soutien respectif (32, 34).

6. Dispositif selon l'une des revendications précédentes, comprenant également des moyens de réglage aptes à positionner les éléments de support (32, 34) sur les pattes respectives (14, 16) de manière réglable.

7. Dispositif selon la revendication 6, où lesdits moyens de réglage comprennent au moins un élément de guidage (52) pour chaque élément de soutien (32, 34), dépassant du côté opposé à la surface de contact respective (34a, 36a) engagé de manière coulissante patte respective (14, 16).

8. Dispositif selon la revendication 7, où chaque patte (14, 16) possède une ouverture traversante (50) pour l'application de l'élément de soutien respectif (32, 34).

9. Dispositif selon la revendication 8, où ledit élément de guidage (52) est positionnable avec interférence le long de l'ouverture traversante (50).

10. Dispositif selon la revendication 8, où l'ouverture traversante (50) comprend une multitude de stations d'arrêt discrètes (54, 56, 58), dans lesquelles l'élément de guidage (52) reste contraint à maintenir la position, par exemple par interférence ou encliquetage.

11. Dispositif selon la revendication 10, où l'ouverture traversante (50) comprend un canal principal (70) qui s'étend dans la direction longitudinale selon une direction principale (K), une multitude de canaux secondaires (72, 74, 76), qui s'étendent selon des directions (L1, L2, L3) dans la direction de la largeur de la patte (14, 16), incidentes dans la direction principale (K), et lesdites stations d'arrêt (54, 56, 58) sont accessibles depuis le canal principal (70) via lesdits canaux secondaires (72, 74, 76).

12. Dispositif selon l'une des revendications précédentes, où les éléments de soutien (32, 34) sont engagés de manière permanente avec les pattes.

13. Dispositif selon l'une des revendications de 1 à 11, où les éléments de soutien (32, 34) sont détachables des pattes.

14. Dispositif selon les revendications 13 et 8, où l'ouverture traversante (50) comprend une station de séparation (64) ayant une taille caractéristique telle qu'elle puisse être traversée par l'élément de guidage (52) pour détacher l'élément de soutien (32, 34) de la patte respective (14, 16).

15. Lunettes comprenant une monture (1) et un dispositif de soutien (8) pour le nez selon l'une des revendications précédentes.
